# FASCICULE DE BREVET EUROPEEN

(11) **EP 2 241 054 B1**
(45) Date de publication et mention de la délivrance du brevet: **30.12.2015**
(21) Numéro de dépôt: 09700622.5
(22) Date de dépôt: 05.01.2009
(51) Int. Cl.: H04L 9/32

(54) **PROCEDE ET DISPOSITIF DE SIGNATURE**
SIGNATURVERFAHREN UND VORRICHTUNG
SIGNATURE METHOD AND DEVICE

(30) Priorité: 07.01.2008 FR 0800078
(43) Date de publication de la demande: 20.10.2010
(60) Demande divisionnaire: 12193794.0
(73) Titulaire: Trustseed SAS, 78490 Galluis (FR)
(72) Inventeur: BLOT-LEFEVRE, Eric, F-92200 Neuilly Sur Seine (FR)
(74) Mandataire: Nguyen Van Yen, Christian
(86) Numéro de dépôt international: PCT/EP2009/050037
(87) Numéro de publication internationale: WO 2009/087128

(56) Documents cités:
- MENEZES, VANSTONE, OORSCHOT: "Handbook of Applied Cryptography" 1997, CRC PRESS LLC , USA , XP002489380 page 4 pages 11-13 pages 22-23 pages 28-30 page 399 - page 400 page 548 - page 549 page 556 page 559 - page 560 page 581 - page 583
- SHI Q ET AL: "Signature-based approach to fair document exchange" IEE PROCEEDINGS : COMMUNICATIONS, INSTITUTION OF ELECTRICAL ENGINEERS, GB, vol. 150, no. 1, 13 février 2003 (2003-02-13), pages 21-27, XP006019685 ISSN: 1350-2425

## Description

La présente invention concerne un procédé et un dispositif de signature. Elle s'applique, en particulier, aux échanges de messages ou documents entre des personnes reliées, entre elles, par un réseau de télécommunication.

En ce qui concerne la signature juridique sur un document dématérialisé, la réglementation prévoit que, lorsque la signature est numérique, et à défaut de « signature électronique » validée par une Autorité de Certification agréée, elle consiste en l'usage d'un procédé fiable d'identification personnelle forte garantissant son lien avec l'acte auquel elle se rattache.

On rappelle que la signature électronique est un instrument régi par la Loi. C'est un procédé cryptographique associé à un certificat d'identité numérique appartenant exclusivement à son propriétaire, c'est-à-dire au signataire. La signature électronique sécurisée se conforme à trois principes.

Le premier concerne la sécurité de l'identification personnelle du signataire. La signature électronique contient le certificat d'identité numérique de son propriétaire. Le certificat a été émis par un bureau d'enrôlement ou d'enregistrement qui a la responsabilité d'établir le certificat d'identité numérique en fonction de l'état civil et des attributs de confiance de la personne enregistrée. La valeur probante du certificat est vérifiée par l'Autorité de Certification qui crée le certificat numérique et qui l'attribue à son propriétaire quand celui-ci a fourni les justificatifs papiers établissant son identité, son domicile, sa nationalité, ses coordonnées téléphoniques...

Le deuxième principe régissant la signature électronique concerne l'intégrité du document. La signature électronique établit le scellement du contenu qui est obligatoirement rattaché au document. Ce contenu est, éventuellement, chiffré. La signature « garantit avec l'acte auquel elle s'attache un lien tel que toute modification ultérieure de l'acte soit détectable ».

Le troisième principe régissant la signature électronique concerne l'unicité du procédé de signature électronique. L'instrument de signature est conservé par le signataire « sous son contrôle exclusif ». La signature « est propre au signataire ». Il est donc impossible de la prêter sans se mettre en infraction à la loi.

La transposition de la signature manuscrite sur un document papier en une signature électronique sur un document numérique utilise, donc, deux moyens associés qui sont, d'une part, des moyens pour identifier le signataire le certificat numérique révélant son identité et indiquant la référence du bureau d'enregistrement et de l'autorité de certification qui sont à l'origine de son émission et de sa publication sur un annuaire et, d'autre part, un procédé de cryptographie au sens de la Loi permettant de chiffrer le contenu du document.

Le document numérique ainsi signé permet d'établir la valeur probante de plusieurs éléments :
- l'identité de la personne signataire,
- l'expression de sa volonté quand il active la signature pour un document ou pour une action exécutée concernant ce document tel qu'envoyer et recevoir ce document,
- le lien entre l'expression de la volonté et le contenu de l'acte ou du document,
- le contenu du document ou la signification de l'action exécutée et
- la garantie d'intégrité du document ou de la signification de l'action exécutée.

Un procédé de cette nature qui utilise une signature électronique est notamment divulgué par le document « Handbook of Applied Cryptography, Menezes et alii, CRC Press, 1997. Cependant ce procédé ne permet pas de garantir la valeur probante des échanges entre expéditeur et destinataire dans une chaine de correspondances, notamment l'acte de volonté du destinataire consistant à accepter de prendre connaissance du document qui lui est envoyé. En outre, il arrive que le signataire ne veuille pas installer une signature électronique sur son poste de travail.

La présente invention résout ce problème en procurant un procédé qui garantie la traçabilité des accès aux documents par les utilisateurs de la chaîne de confiance, éventuellement sans recourir à une signature électronique.

La présente invention vise à remédier à ces inconvénients pour vérifier que les cinq éléments constitutifs de la valeur probante d'un document numérique existent. L'invention est définie dans les révendications indépendantes. Les modes de realization particulières sont exposées dans les révendications dépendantes.

D'autres avantages, buts et caractéristiques de la présente ressortiront de la description qui va suivre, faite, dans un but explicatif et nullement limitatif en regard des dessins annexés, dans lesquels :
- la figure 1 représente, schématiquement, des éléments d'un dispositif objet de la présente invention,
- la figure 2 représente, sous forme d'un logigramme, des étapes mises en oeuvre dans un mode de réalisation particulier du procédé objet de la présente invention.

La description ci-dessous ne fait référence, pour chaque document, qu'à un seul expéditeur et un seul destinataire. Cependant, la présente invention ne se limite pas à cette configuration mais s'étend, au contraire au cas où plusieurs expéditeurs doivent valider un document avant qu'il soit expédié et/ou au cas où plusieurs destinataires du document sont prévus.

Avant de décrire des modes de réalisation particuliers, en regard des figures, on donne, ci-dessous, une description générale de l'invention. Tout d'abord, on rappelle que la signature juridique sur un document dématérialisé consiste en l'usage d'un procédé fiable d'identification personnelle forte garantissant son lien avec l'acte auquel elle se rattache. Cette identification forte est faite par un Tiers de Confiance presté pour l'enregistrement personnel initial de l'état civil et des coordonnées téléphoniques personnelles. L'enregistrement comporte également l'acceptation d'une convention de correspondance universelle à valeur juridique probante dans laquelle la personne adhérent au service de transmission de documents consent à donner une procuration de scellement de ses documents de correspondance électronique à un prestataire de services documentaires, dénommé « opérateur de correspondance documentaire » qui n'est pas le tiers de confiance neutre.

Ainsi, à défaut de signature électronique détenue par la personne signataire d'un document, ou en cas de nullité de sa signature électronique dont le certificat d'identité numérique n'est pas validé (ou révoqué) par son établissement d'émission initiale, l'Autorité de Certification, la signature juridique consiste à faire procéder par le tiers de confiance à une identification forte par une boucle, ou un cycle, de transmission sécurisée d'un secret, ensuite à vérifier la validité de la convention de correspondance détenant la procuration de scellement vis-à-vis d'un opérateur désigné, enfin à vérifier que l'opérateur mandaté a bien réalisé le scellement du document avant de l'archiver dans un coffre électronique à valeur probante.

Enfin, le Tiers de Confiance établit, indépendamment de l'opérateur, un horodatage et un constat de clic de validation matérialisant ou représentant la volonté d'exercer une signature juridique significative pour le document concerné par la correspondance électronique. La signature électronique s'applique aussi bien pour le document d'expédition que pour l' « avis de réception » , document à part entière créé à réception du document par le destinataire.

Pour la validité du la signature juridique de nature numérique, à défaut de l'usage d'une « signature électronique » valable, aussi bien pour le besoin de l'expéditeur sur son document (fichier de correspondance) que pour le destinataire (fichier d'accusé de réception), il y a lieu de réunir informatiquement des preuves électroniques successives :
- identification de la personne et mesure de la force probante de cette identité qui doit être supérieure à 3 (voir, en ce qui concerne la notation de l'identité numérique, la demande de brevet FR 0604107 incorporée ici par référence) ;
- contrôle de l'existence d'une convention de correspondance universelle signée par la personne ;
- vérification que la convention de correspondance universelle signée comporte une procuration de scellement valide à un opérateur de correspondance documentaire toujours affilié au réseau de Tiers de confiance du Tiers de confiance ;
- preuve de remise au Tiers de Confiance du scellement du document et de sa mise en coffre fort électronique à valeur probante par et chez l'opérateur ;
- horodatage, par le Tiers de Confiance, du document avec sa preuve de scellement et
- notification au signataire, par courrier électronique et par le Tiers de Confiance :
   a. que le signataire a été identifié fortement, ce qui correspond au niveau de valeur probante,
   b. que le document a été scellé et archivé par l'opérateur du signataire, à l'aide de références et
   c. que le tout a été horodaté et immatriculé pour requérir sa signature juridique matérialisée par un clic sur l'interface sécurisée.

Au clic d'expression de signature juridique, le Tiers de Confiance dresse un procès-verbal signé avec sa propre signature électronique de Tiers de Confiance,

pour officialiser la conformité de la procédure d'expédition ou de réception documentaire.

Le procès-verbal électronique comporte un ensemble de données associées à la transmission du document par l'émetteur ou au destinataire, ledit ensemble comportant des identifications d'éléments d'authentification de l'émetteur ou du destinataire, de scellement du document, de fourniture du document par l'émetteur ou d'accès au document par le destinataire et d'horodatage de la fourniture du document ou de l'accès au document par le destinataire au document.

Ce procès-verbal est conservé dans le bureau de correspondance que met à la disposition du signataire le Tiers de Confiance (pour l'expéditeur et pour le destinataire). Ce procès-verbal est envoyé à l'opérateur qui est, seulement à réception du procès-verbal, autorisé à faire le mouvement de correspondance (c'est-à-dire soit l'envoi du document, soit l'envoi de l'accusé de réception) entre les deux parties sur les comptes courants de correspondance ouverts obligatoirement par les deux parties en correspondance dans les livres de l'opérateur. Ce n'est qu'à partir de ce mouvement de correspondance qu'on peut initier en service dérivé, par exemple par le biais de coupons de gestion (coupons associés à un document et définissant une tâche susceptible d'être effectuée en relation avec le document ainsi que le formulaire à utiliser lors de la réalisation de cette tâche, comme exposé dans la demande de brevet FR 07 00648 incorporée ici par référence) des prestations additionnelles de communication par courrier électronique (« email »), par télécopie électronique (« efax »), par AS2, ou par éditique (re-matérialisation : impression, mise sous pli et envoi par la poste).

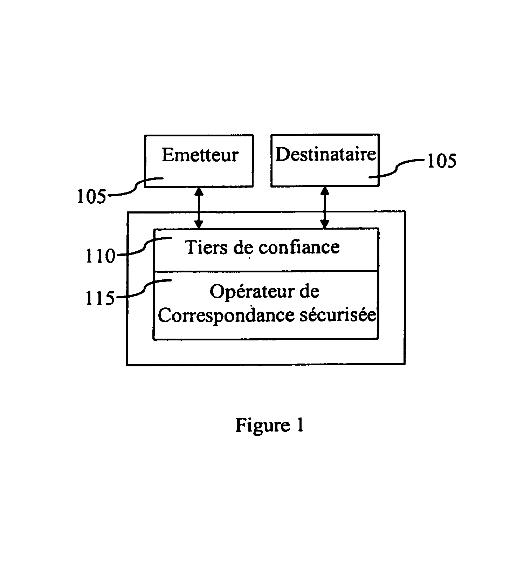

Comme on l'observe en figure 1, pour mettre en oeuvre la signature juridique objet de la présente invention, il est nécessaire que l'utilisateur 105 passe un contrat avec un Tiers de Confiance 110 et/ou avec un Opérateur de Correspondance sécurisée 115, pour utiliser leurs services de gestion documentaire.

Le Tiers de Confiance 110 s'occupe principalement d'enregistrer et contrôler l'identité numérique des utilisateurs. Le Tiers de Confiance 110 assure aussi le procès-verbal d'expédition ou de réception du document, pour chaque correspondant, avec son Opérateur de Correspondance 115 qui compose, chiffre ou scelle le document. Ceci est effectué en toute neutralité puisque le Tiers de Confiance est indépendant des parties en présence.

L'Opérateur de Correspondance 115 réalise, éventuellement, toutes les opérations de composition, transmission et conservation des documents avec leurs preuves d'envoi et de réception.

On rappelle ici qu'une lettre recommandée relative à la conclusion ou à l'exécution d'un contrat peut être envoyée par un courrier électronique à condition que ce courrier soit acheminé par un tiers selon un procédé permettant d'identifier le tiers, de désigner l'expéditeur, de garantir l'identité du destinataire, et d'établir si la lettre a été remise ou non au destinataire.

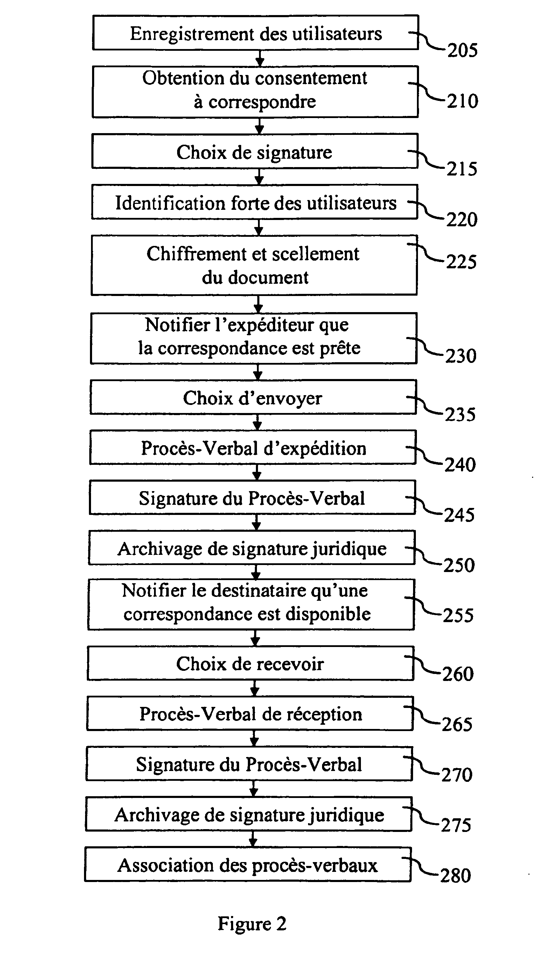

Le procédé objet de la présente invention consiste, pour le Tiers de Confiance (« TDC ») et pour l'opérateur de correspondance documentaire (« OCD »), à effectuer les opérations suivantes illustrées en figure 2 et décrites ci-dessous.

Au cours d'une étape 205, on enregistre chaque partie à une correspondance pour utiliser leur identité numérique avec une valeur probante certaine. Au cours de cette étape 205, le Tiers de Confiance procède à l'identification forte de la personne, comme exposé en regard de l'étape 220, ci-dessous.

Au cours d'une étape 210, le Tiers de Confiance obtient le consentement du destinataire pour correspondre avec l'expéditeur si celui-ci n'a pas déjà été enregistré. Le tiers de confiance propose donc, à chaque nouveau correspondant (qui reçoit une notification par « email » de la mise à sa disposition d'un courrier arrivé chez l'Opérateur, en ce qui concerne le destinataire), de s'enregistrer (Etat civil/identité numérique) pour adhérer et signer une « Convention de Correspondance à Valeur probante » équivalente à une convention de preuve qui le protège. Cette procédure lancée par le Tiers de Confiance s'appelle « Adhésion ». Elle est ordonnancée à la demande du correspondant expéditeur.

Au cours d'une étape 215, le Tiers de Confiance propose au destinataire, dans la « Convention de Correspondance à Valeur probante », le choix entre une signature électronique (« SE ») installée sur le poste de travail (par exemple par l'intermédiaire d'une clé USB, acronyme de « Universal Serial Bus », c'est-à-dire-mettant en oeuvre le protocole USB) et une signature par procès-verbal électronique (« SPPVE »). Comme on le verra plus loin, la signature par procès-verbal électronique consiste à transposer la signature juridique en réunissant deux éléments : « l'identification forte » du correspondant connecté à distance, et « le chiffrement » du document de correspondance.

Au cours d'une étape 220, on procède à l'identification forte de l'utilisateur. Dans un mode de réalisation, la procédure d'authentification de l'utilisateur est une identification forte assurée par le Tiers de Confiance (« TDC »). Celui-ci adresse un message court, ou SMS (acronyme de « Short Message System ») contenant un code secret crypté à usage unique, sur le téléphone mobile de l'utilisateur, cet utilisateur devant le retranscrire, dans les vingt secondes suivantes, sur l'interface informatique du Tiers de Confiance pour lui prouver son identité après que le nom d'utilisateur (« login ») et un mot de passe statique aient été vérifiés. Le code secret crypté est une séquence de sept chiffres ou lettres dont la combinaison est calculée en fonction de l'indicatif numérique du certificat original (Numéro d'Enregistrement Légal) affecté à ce correspondant. Préférentiellement, ce code dépend aussi du contenu du document, de l'identité d'au moins l'un des correspondants, de l'horodatage et d'un nombre aléatoire.

Au cours d'une étape 225, on chiffre et scellement le document. Le chiffrement documentaire est confié, par procuration, à l'opérateur de correspondance documentaire (« OCD »). L'adhésion à la convention de correspondance indique le nom de l'opérateur de correspondance documentaire mandaté. Chaque document est chiffré par l'opérateur de correspondance documentaire avec sa propre signature électronique (clé privée) dont le certificat d'identité numérique est, par excellence, valide ou vérifié sur l'annuaire de révocation mis à la disposition du public par l'Autorité de Certification sécurisée dont il dépend.

Au cours d'une étape 230, on avise l'expéditeur ou signataire, par un courrier électronique (« email ») émis par le Tiers de Confiance, que sa correspondance est prête pour qu'il valide son document avant de donner son consentement pour l'envoyer. Ce document d'envoi (lettre ou fichier texte de l'expéditeur) comporte un fichier PDF, un scellement et un certificat de signature.

Au cours d'une étape 235, on détecte et traite le choix de l'expéditeur. L' action exécutée est effectuée au niveau du Tiers de Confiance. Il est symbolisé par un ou deux « clic », c'est-à-dire une sélection avec un dispositif de pointage, par exemple une souris informatique, d'une zone affichée représentant son accord (par exemple un texte comme « J'accepte »). Un ou deux clics peuvent aussi signifier

que la correspondance est annulée ou refusée, selon la position identifiée par le dispositif de pointage (par exemple sur un texte comme « Je refuse »). Le clic/double clic est constaté par le tiers de confiance et il lui est attribué un horodatage spécifique. En variante, c'est la saisie, sur un terminal différent du téléphone, d'un code transmis par message court (SMS) comme exposé en regard de l'étape 220, qui est considéré comme l'expression de la volonté de l'expéditeur de valider le document et la transmission de ce document.

Au cours d'une étape 240, on dresse un procès-verbal électronique (« PVE ») d'expédition du document. Le procès-verbal électronique d'expédition de document comporte un ensemble de données associées à la transmission du document par l'émetteur, ledit ensemble comportant des identifications d'éléments d'authentification de l'émetteur, de scellement du document, de validation du document par l'émetteur et d'horodatage de la validation du document par l'émetteur. Ainsi, c'est le Tiers de Confiance qui reconstitue, dans son procès-verbal, « les liens » nécessaires à la signature juridique du document, entre les données suivantes :
- l'identité numérique qualifiée de l'expéditeur,
- un lien avec une notation de l'identité numérique de l'expéditeur,
- la référence au certificat utilisé pour signer le document,
- la notation de l'identité numérique de l'expéditeur,
- le document numérique chiffré,
- la référence à l'opérateur de correspondance documentaire mandaté,
- la référence à la signature électronique de l'opérateur de correspondance documentaire,
- l'horodatage du clic de gestion,
- la référence à l'autorité d'horodatage et/ou
- la signification de l'action exécutée.

Au cours d'une étape 245, le Tiers de Confiance signe le procès-verbal électronique d'expédition, avec sa propre clé privée, le procès-verbal de signature de l'expéditeur, qui réunit, dans un fichier structuré, l'identité de l'expéditeur notée, le document chiffré, et l'action exécuté horodatée.

Au cours d'une étape 250, le Tiers de Confiance archive la signature juridique établie par le procès-verbal d'expédition. Le Tiers de Confiance dispose d'un journal récapitulant tous les procès-verbaux électroniques. Chaque procès-verbal de signature juridique concernant un correspondant, pour son envoi ou pour sa réception, mentionne, pour formaliser la signature juridique constatée par le Tiers de Confiance, l'identifiant ou le matricule du correspondant, le numéro de sa convention de correspondance acceptée, la référence de l'opérateur mandaté pour chiffrer, la référence de la signature électronique et de l'autorité de certification propres à l'opérateur. Le journal des signatures par procès-verbal électroniques (« SPPVE ») est déposé dans un coffre fort électronique en le cryptant avec la clé publique du Tiers de Confiance.

Au cours d'une étape 255, le Tiers de Confiance avise le destinataire, par courrier électronique (email), qu'une correspondance est disponible à son attention ; c'est le document d'accusé de réception.

Au cours d'une étape 260, le Tiers de Confiance détecte et traite le choix du destinataire de manière similaire à ce qui a été détaillé en regard de l'étape 235. Le clic/double clic est ainsi constaté par le Tiers de Confiance et il lui est attribué un horodatage spécifique en faisant appel à une autorité d'horodatage. En variante, c'est la saisie, sur un terminal différent du téléphone, d'un code secret transmis par message court (SMS) comme exposé en regard des étapes 220 et 235, qui est considéré comme l'expression de la volonté du destinataire d'accéder au document.

Au cours d'une étape 265, le Tiers de Confiance dresse un procès-verbal électronique (« PVE ») de remise de document. Le procès-verbal électronique de remise de document comporte un ensemble de données associées à la transmission du document au destinataire, ledit ensemble comportant des identifications d'éléments d'authentification du destinataire, de scellement du document, d'accès par le destinataire au document et d'horodatage de l'accès par le destinataire au document. Ainsi, c'est le Tiers de Confiance qui reconstitue, dans son procès-verbal, « les liens » nécessaires à la signature juridique du document, entre les données suivantes :
- l'identité numérique qualifiée du destinataire,
- un lien avec une notation de l'identité numérique du destinataire,
- la référence au certificat utilisé pour signer le document,
- la notation de l'identité numérique du destinataire,
- le document numérique chiffré,
- la référence à l'opérateur mandaté par le destinataire
- la référence à la signature électronique de cet opérateur,
- l'horodatage du clic de gestion,
- la référence à l'autorité d'horodatage et/ou
- la signification de l' action exécutée.

Au cours d'une étape 270, le Tiers de Confiance signe, avec sa propre clé privée, le procès-verbal électronique (« PVE ») de remise du document au destinataire, qui réunit dans un fichier structuré l'identité du destinataire notée, le document chiffré, et l'action exécutée horodatée.

Au cours d'une étape 275, le Tiers de Confiance archive la signature juridique établie par le procès-verbal de remise du document comme exposé en regard de l'étape 250.

Au cours d'une étape 280, on associe, en mémoire, les procès-verbaux d'expédition et de remise du document, de manière connue en soi. Cette association est forte et comporte un numéro d'immatriculation du document et le nom du Tiers de Confiance.

On récapitule, dans le tableau qui suit, différentes étapes mises en oeuvre dans des modes de réalisation particuliers du procédé objet de la présente invention.

| Adhérent Correspondant Signataire | Tiers de Confiance | Opérateur de correspondance documentaire |
|---|---|---|
| 1. Enregistrement Préalable Expéditeur ( ou Destinataire) | Bureau d'Enregistrement Etat Civil Certificat d'identité numérique Notation de l'identité numérique Choix de la signature : Signature électronique ou Signature par procès-verbal Electronique (SPPVE) | |
| 2. Adhésion spontanée | Adhésion à la Convention de Correspondance Documentaire | |
| Ou Invitation Concerne le destinataire avisé de la réception d'un courrier | Mention de l'Opérateur mandaté Choix de ses Prestations de services Option de Procuration confiée à l'Opérateur mandaté pour chiffrer ou sceller les documents d'envoi et de réception de l'Invité. | |
| 3. Authentification forte personnelle | Identification personnelle par Login & Mot de Passe + le code secret crypté SMS | |
| 4. Scellement pour l'intégrité du document envoyé ou de l'AR retourné | | Action de scellement du document par l'Opérateur qui utilise sa clé privée de signature électronique |
| 5. Notification du document pour envoi ou réception | Email envoyé à l'Expéditeur/Destinataire authentifié pour qu'il manifeste son action exécutée par « un clic » significatif : demande d'envoi/AR | |
| 6. Procès-verbal Electronique | Etabli par le Tiers de confiance en réunissant les preuves de l'authentification forte (ID), du scellement du document avec la SE de l'Opérateur, de l'horodatage du clic de gestion ou de validation pour envoyer (ou recevoir) le document | |
| 7. Signature électronique du procès-verbal | Utilisation par le Tiers de Confiance de sa clé privée de signature électronique dont on a préalablement vérifié la validité auprès de son Autorité de Certification. | |
| 8. Archivage électronique à valeur probante des PVE | Mise en coffre fort électronique du journal quotidien des signatures par procès-verbaux électroniques | |
| 9. Option territorialité Archivage Opérateur National | Transfert copie conforme à l'Opérateur dépositaire des preuves légales du correspondant domicilié dans son pays. | Cryptage de la copie conforme pour le coffre fort nominatif du correspondant et envoi d'un certificat de dépôt au tiers de confiance pour lui confirmer l'archivage national réalisé. |
| 10. Option territorialité Impression Routage | Envoi des données sécurisées à l'Opérateur national | Impression et routage de la preuve de signature par procès-verbal électronique Récapitulant les informations enregistrées dans le journal de signatures du TDC |
| | | |

On observe les rôles différents du Tiers de Confiance de Correspondance (TCC) et de l'opérateur de correspondance documentaire (« OCD »). Le Tiers de Confiance de correspondance est un organisme neutre qui assure les rôles nécessaires pour enregistrer l'identité des personnes avec leur état civil et leurs objets de correspondance. Il garantit le secret ou la confidentialité de ces attributs de confiance et des objets de correspondance qui sont exclusivement employés dans l'ordonnancement des tâches de correspondance confiées à un ou plusieurs opérateurs de gestion documentaire. Il ordonnance le flux de travail (« workflow ») de gestion documentaire en vérifiant, à chaque opération, que l'opérateur désigné pour une tâche documentaire s'acquitte bien de son travail en délivrant à l'issue de cette opération les justificatifs ou le « chemin de révision » entre sa prestation et la preuve. Le Tiers de Confiance assure aussi la coordination et l'interopérabilité des échanges entre les opérateurs impliquées ou mobilisés dans une chaine de traitement documentaire à valeur probante. Le Tiers de Confiance établit, pour les deux parties en correspondance, un procès-verbal d'émission et de réception du document pour authentifier la signature juridique de chaque personne engageant sa responsabilité pour valider et envoyer, ou pour valider et recevoir un document électronique. Le procès-verbal d'émission ou de réception contient les justificatifs de la signature juridique dématérialisée du signataire ainsi que l'horodatage du clic signifiant son accord ou son consentement pour valider et correspondre avec la contrepartie pour le document concerné. Enfin, le Tiers de Confiance assure le « transfert » de chaque document original qui transite par lui pour être déplacé d'un coffre-fort à un autre, entre deux tiers d'archivage distants qui sont affiliés au réseau de Tiers de Confiance et qui utilisent, à ce titre, un protocole tiers de confiance bien spécifique et sécurisé.

L'opérateur de correspondance documentaire exécute les tâches d'ordonnancement qui lui sont confiées par le Tiers de confiance en fonction du mandat déposé pour lui à l'enregistrement de chaque correspondant déposant ses objets de correspondance. Ses tâches sont les suivantes :
- composition de fichier simple ou structuré,
- origination du document en partie double : deux « originels » certifiés conformes,
- si l'émetteur a utilisé une signature électronique, vérification du certificat,
- protection du document avec une option de scellement par procuration à l'opérateur,
- conservation du document avec ses justificatifs ou leur liste récapitulative par archivage à valeur probante dans chaque coffre fort électronique nominatif,
- commutation de message : transmission bilatérale de duplicata en comptes courants de correspondance pour lecture et téléchargement en mode sécurisé collaboratif,
- ampliation de document : impression en plusieurs exemplaires, mise sous enveloppe et routage de copies conformes sur papier,
- transposition du fichier structuré ou de ses mentions obligatoires en un seul exemplaire numérique. Il s'agit d'un transfert de l'original ou d'une lecture automatique univoque des mentions légales obligatoires du fichier, et d'un retour de l'accusé de réception justificatif signé et renvoyé à l'émetteur (protocole de communication AS2, AS 400...).

Ces tâches sont ordonnancées par un Tiers de Confiance vis-à-vis d'un ou plusieurs opérateurs mandatés par l'expéditeur. Pour chaque tâche, le Tiers de Confiance met à la disposition des informations dont il a besoin : identité, notation de l'identité personnelle, coordonnées téléphoniques, adresses courriels, règles établies par les conventions de correspondances bilatérales, autres dispositions réglementaires, charte graphique, formulaire de référence, mandats de gestion documentaire désignant les opérateurs impliqués, procuration de scellement confié à un opérateur, choix de signature juridique et électronique, références du workflow de gestion avec les opérateurs concernés, ...

On note que le Tiers de Confiance vérifie chaque prestation réalisée pour donner un certificat de conformité et consigner l'opération sur son « chemin de révision » (piste d'audit) avant de lancer l'ordonnancement de la prestation suivante.

## Revendications

1. Procédé de signature d'un document à transmettre entre deux correspondants, un expéditeur et un destinataire, **caractérisé en ce qu'**il comporte :
- une étape (205) d'enregistrement de l'expéditeur et du destinataire de ce document pour leur attribuer une identité numérique,
- une étape (210) d'autorisation, par le destinataire, à correspondre avec l'expéditeur,
- une étape (220) d'authentification forte des identités numériques de l'expéditeur et du destinataire par usage d'un code à usage unique éphémère;
- une étape (225) de chiffrement du document,
- une étape (230) de notification à l'expéditeur que le document est prêt à être envoyé ;
- une étape (235) de détection d'une validation du document par l'expéditeur ;
- une étape de confirmation par un tiers de l'exécution de ladite étape de validation;
- une étape (255) de notification au destinataire que le document est disponible,
- une étape (260) de détection d'un accès au document, par le destinataire,
- une étape (265) de constitution d'un procès-verbal électronique de remise du document, ledit procès-verbal électronique de remise de document comportant un ensemble de données associées à la transmission du document au destinataire, ledit ensemble comportant des identifications d'éléments d'authentification du destinataire, de scellement du document, d'accès par le destinataire au document et d'horodatage de l'accès par le destinataire au document, et
- une étape (270) de signature électronique par un tiers de confiance, avec sa propre clé privée, du procès-verbal électronique de remise de document.

2. Procédé selon la revendication 1, caractérisé en ce quel'étape (240) de confirmation par ledit tiers de confiance de l'exécution de ladite étape de validation comprend une constitution d'un procès-verbal électronique d'expédition, ledit procès-verbal électronique d'expédition de document comportant un ensemble de données associées à la transmission du document par l'émetteur, ledit ensemble comportant des identifications d'éléments d'authentification de l'émetteur, de scellement du document, de validation du document par l'émetteur et d'horodatage de la validation du document par l'émetteur, et en ce qu'il comprend en outre une étape (245) de signature électronique, par le tiers de confiance, avec sa propre clé privée, du procès-verbal électronique d'expédition.

3. Procédé selon la revendication 1, **caractérisé en ce que** l'étape (220) d'authentification forte du correspondant et/ou l'étape (235, 260) de détection d'un choix dudit correspondant comporte l'envoi, à destination d'un téléphone, d'un code à usage unique et une étape de saisie, par le correspondant, de ce code, sur un terminal informatique différent dudit téléphone.

4. Procédé selon l'une quelconque des revendications 1 à 3, **caractérisé en ce que**, au cours de l'étape (225) de chiffrement, le document est chiffré par un opérateur de correspondance avec sa propre signature électronique.

5. Procédé selon l'une quelconque des revendications 1 à 4, **caractérisé en ce que** le document transmis au destinataire comporte un fichier PDF, une signature et un certificat de signature.

6. Procédé selon l'une quelconque des revendications 1 à 5, **caractérisé en ce qu'**il comporte une étape (265) d'horodatage du choix effectué par le correspondant au cours de l'étape de détection de choix.

7. Procédé selon l'une quelconque des revendications 1 à 6, **caractérisé en ce que**, au cours de l'étape (260) de détection d'un choix, on détecte une sélection d'un message explicite par le correspondant, en mettant en oeuvre un dispositif de pointage.

8. Procédé selon l'une quelconque des revendications 1 à 7, **caractérisé en ce que**, au cours d'une étape (240, 265) de constitution d'un procès-verbal, le procès-verbal comporte des liens entre les données suivantes :
- l'identité numérique du correspondant,
- la référence au certificat utilisé pour signer le document,
- le document numérique chiffré,
- la référence à l'opérateur mandaté,
- la référence à la signature électronique de l'opérateur mandaté,
- l'horodatage du choix effectué par le correspondant,
- la référence à l'autorité d'horodatage et
- la signification de l'action exécutée.

9. Procédé selon l'une quelconque des revendications 1 à 8, **caractérisé en ce que**, au cours d'une étape (240, 265) de constitution d'un procès-verbal, le procès-verbal comporte un lien avec une notation de l'identité numérique du correspondant.

10. Procédé selon l'une quelconque des revendications 1 à 9, **caractérisé en ce qu'**il comporte une étape (275) d'archivage de la signature juridique établie par chaque procès-verbal.

11. Dispositif de signature d'un document à transmettre entre deux correspondants, un expéditeur et un destinataire, **caractérisé en ce qu'**il comporte :
- un moyen d'enregistrement de l'expéditeur et du destinataire de ce document pour leur attribuer une identité numérique,
- un moyen d'authentification forte des identités numériques de l'expéditeur et du destinataire par usage d'un code à usage unique éphémère ;
- un moyen d'autorisation, par le destinataire à correspondre avec l'expéditeur,
- un moyen de chiffrement du document,
- un moyen de notification à l'expéditeur que le document est prêt à être envoyé ;
- un moyen de détection d'une validation du document, par l'expéditeur ;
- un moyen de confirmation par un tiers de confiance de l'exécution de ladite étape de validation;
- un moyen de notification au destinataire que le document est disponible,
- un moyen de détection d'un accès au document, par le destinataire,
- un moyen de constitution d'un procès-verbal électronique de remise du document, ledit procès-verbal électronique de remise de document comportant un ensemble de données associées à la transmission du document au destinataire, ledit ensemble comportant des identifications d'éléments d'authentification du destinataire, de scellement du document, d'accès par le destinataire au document et d'horodatage de l'accès par le destinataire au document, et
- un moyen de signature électronique par le tiers de confiance, avec sa propre clé privée, du procès-verbal électronique de remise de document.

12. Dispositif selon la revendication 11, **caractérisé en ce que** le moyen d'identification du correspondant et/ou le moyen de détection d'un choix dudit correspondant est adapté à effectuer l'envoi, à destination d'un téléphone, d'un code à usage unique et à recevoir et vérifier ce code saisi par le correspondant, sur un terminal informatique différent dudit téléphone.

13. Dispositif selon l'une quelconque des revendications 11 ou 12, **caractérisé en ce que** le moyen de chiffrement est adapté à faire chiffrer le document par un opérateur de correspondance avec la signature électronique de l'opérateur de correspondance.

14. Dispositif selon l'une quelconque des revendications 11 à 13, **caractérisé en ce que** le moyen de constitution d'un procès-verbal est adapté à recevoir un lien avec une notation de l'identité numérique d'un correspondant et à intégrer ce lien dans le procès-verbal.

## Patentansprüche

1. Verfahren zum Signieren eines Dokuments, das zwischen zwei Korrespondenten, einem Absender und einem Empfänger, zu übertragen ist, **dadurch gekennzeichnet, dass** es Folgendes umfasst:
- einen Schritt (205) des Registrierens des Absenders und des Empfängers dieses Dokuments, um ihnen eine digitale Identität zuzuteilen,
- einen Schritt (210) des Genehmigens durch den Empfänger des Korrespondierens mit dem Absender,
- einen Schritt (220) des starken Authentifizierens der digitalen Identitäten des Absenders und des Empfängers durch die Verwendung eines vergänglichen Codes zum einmaligen Gebrauch;
- einen Schritt (225) des Verschlüsselns des Dokuments;
- einen Schritt (230) des Benachrichtigens des Absenders, dass das Dokument versandbereit ist;
- einen Schritt (235) des Ermittelns einer Validierung des Dokuments durch den Absender;
- einen Schritt des Bestätigens durch einen Dritten der Ausführung des Validierungsschrittes;
- einen Schritt (255) des Benachrichtigens des Empfängers, dass das Dokument verfügbar ist;
- einen Schritt (260) des Ermittelns eines Zugriffs auf das Dokument durch den Empfänger;
- einen Schritt (265) des Verfassens eines elektronischen Protokolls der Dokumentenübergabe, wobei das elektronische Protokoll der Dokumentenübergabe einen Satz Daten umfasst, die mit der Übertragung des Dokuments an den Empfänger verknüpft sind, wobei der Satz Identifizierungen von Elementen einer Authentifizierung des Empfängers, einer Versiegelung des Dokuments, eines Zugriffs durch den Empfänger auf das Dokument und einer Zeitstempelung des Zugriffs durch den Empfänger auf das Dokument umfasst; und
- einen Schritt (270) des elektronischen Signierens durch einen vertrauenswürdigen Dritten mit seinem eigenen privaten Schlüssel des elektronischen Protokolls der Dokumentenübergabe.

2. Verfahren nach Anspruch 1, **dadurch gekennzeichnet, dass** der Schritt (240) des Bestätigens durch den vertrauenswürdigen Dritten der Ausführung des Schrittes des Validierens das Verfassen eines elektronischen Absendungsprotokolls umfasst, wobei das elektronische Absendungsprotokoll einen Satz Daten umfasst, die mit der Übertragung des Dokuments durch den Sender verknüpft sind, wobei der Satz Identifizierungen von Elementen einer Authentifizierung des Senders, einer Versiegelung des Dokuments, einer Validierung des Dokuments durch den Sender und einer Zeitstempelung der Validierung des Dokuments durch den Sender umfasst, und dass sie ferner einen Schritt (245) des elektronischen Signierens durch den vertrauenswürdigen Dritten mit seinem eigenen privaten Schlüssel des elektronischen Absendungsprotokolls umfasst.

3. Verfahren nach Anspruch 1, **dadurch gekennzeichnet, dass** der Schritt (220) des starken Authentifizierens des Korrespondenten und/oder der Schritt (235, 260) des Ermittelns einer Wahl des Korrespondenten das Senden an ein Telefon eines Codes zum einmaligen Gebrauch und einen Schritt des Eingebens durch den Korrespondenten dieses Codes an einem anderen Computerendgerät als dem Telefon umfasst.

4. Verfahren nach einem der Ansprüche 1 bis 3, **dadurch gekennzeichnet, dass** während des Schrittes (225) des Verschlüsselns das Dokument von einem Korrespondenzbetreiber mit seiner eigenen elektronischen Signatur verschlüsselt wird.

5. Verfahren nach einem der Ansprüche 1 bis 4, **dadurch gekennzeichnet, dass** das Dokument, das an den Empfänger übertragen wird, eine PDF-Datei, eine Signatur und ein Signaturzertifikat umfasst.

6. Verfahren nach einem der Ansprüche 1 bis 5, **dadurch gekennzeichnet, dass** es einen Schritt (265) des Zeitstempelns der Wahl, die durch den Korrespondenzen während des Schritts des Ermittelns der Wahl erfolgt, umfasst.

7. Verfahren nach einem der Ansprüche 1 bis 6, **dadurch gekennzeichnet, dass** während des Schrittes (260) des Ermittelns einer Wahl eine Auswahl einer eindeutigen Nachricht durch den Korrespondenten ermittelt wird, indem eine Zeigevorrichtung eingesetzt wird.

8. Verfahren nach einem der Ansprüche 1 bis 7, **dadurch gekennzeichnet, dass** während des Schrittes (240, 265) des Verfassens eines Protokolls das Protokoll Verknüpfungen zwischen den folgenden Daten umfasst:
- der digitalen Identität des Korrespondenten,
- der Bezugnahme auf das Zertifikat, das verwendet wird, um das Dokument zu signieren,
- dem verschlüsselten digitalen Dokument,
- der Bezugnahme auf den bevollmächtigten Betreiber,
- der Bezugnahme auf die elektronische Signatur des bevollmächtigten Betreibers,
- der Zeitstempelung der Wahl, die durch den Korrespondenten getroffen wird,
- der Bezugnahme auf die Zeitstempelbehörde, und
- der Bedeutung der ausgeführten Aktion.

9. Verfahren nach einem der Ansprüche 1 bis 8, **dadurch gekennzeichnet, dass** während eines Schrittes (240, 265) des Verfassens eines Protokolls das Protokoll eine Verknüpfung mit einer Benotung der digitalen Identität des Korrespondenten umfasst.

10. Verfahren nach einem der Ansprüche 1 bis 9, **dadurch gekennzeichnet, dass** es einen Schritt (275) des Archivierens der rechtsgültigen Signatur, die durch jedes Protokoll festgestellt wird, umfasst.

11. Vorrichtung zum Signieren eines Dokuments, das zwischen zwei Korrespondenten, einem Absender und einem Empfänger, zu übertragen ist, **dadurch gekennzeichnet, dass** sie Folgendes umfasst:
- ein Mittel zur Registrierung des Absenders und des Empfängers dieses Dokuments, um ihnen eine digitale Identität zuzuteilen,
- ein Mittel zur starken Authentifizierung der digitalen Identitäten des Absenders und des Empfängers durch die Verwendung eines vergänglichen Codes zum einmaligen Gebrauch;
- ein Mittel zur Genehmigung durch den Empfänger des Korrespondierens mit dem Sender;
- ein Mittel zur Verschlüsselung des Dokuments;
- ein Mittel zur Benachrichtigung des Absenders, dass das Dokument versandbereit ist;
- ein Mittel zur Ermittlung einer Validierung des Dokuments durch den Absender;
- ein Mittel zur Bestätigung durch einen vertrauenswürdigen Dritten der Ausführung des Schrittes des Validierens;
- ein Mittel zur Benachrichtigung des Empfängers, dass das Dokument verfügbar ist;
- ein Mittel zur Ermittlung eines Zugriffs auf das Dokument durch den Empfänger;
- ein Mittel zur Verfassung eines elektronischen Protokolls der Dokumentenübergabe, wobei das elektronische Protokoll der Dokumentenübergabe einen Satz Daten umfasst, die mit der Übertragung des Dokuments an den Empfänger verknüpft sind, wobei der Satz Identifizierungen von Elementen einer Authentifizierung des Empfängers, einer Versiegelung des Dokuments, eines Zugriffs durch den Empfänger auf das Dokument und einer Zeitstempelung des Zugriffs durch den Empfänger auf das Dokument umfasst; und
- ein Mittel zur elektronischen Signatur des elektronischen Protokolls der Dokumentenübergabe durch einen vertrauenswürdigen Dritten mit seinem eigenen privaten Schlüssel.

12. Vorrichtung nach Anspruch 11, **dadurch gekennzeichnet, dass** das Mittel zur Identifizierung des Korrespondenten und/oder das Mittel zur Ermittlung einer Wahl des Korrespondenten geeignet ist bzw. sind, um das Senden an ein Telefon eines Codes zum einmaligen Gebrauch auszuführen und um diesen Code, der von dem Korrespondenten an einem anderen Computerendgerät als dem Telefon eingegeben wurde, zu empfangen und zu überprüfen.

13. Vorrichtung nach einem der Ansprüche 11 oder 12, **dadurch gekennzeichnet, dass** das Mittel zur Verschlüsselung geeignet ist, um das Dokument durch einen Korrespondenzbetreiber mit der elektronischen Signatur des Korrespondenzbetreibers verschlüsseln zu lassen.

14. Vorrichtung nach einem der Ansprüche 11 bis 13, **dadurch gekennzeichnet, dass** das Mittel zur Verfassung eines Protokolls geeignet ist, um eine Verknüpfung mit einer Benotung der digitalen Identität eines Korrespondenten zu empfangen und um diese Verknüpfung in das Protokoll zu integrieren.

## Claims

1. A method for signing a document to be transmitted between two correspondents, a sender and a recipient, **characterised in that** it comprises:
- a step (205) of registering the sender and the recipient of said document in order to assign them a digital identity;
- a step (210) of the recipient authorising correspondence with the sender;
- a step (220) of strong authentication of digital identities of the sender and of the recipient using an ephemeral single-use code;
- a step (225) of encrypting the document;
- a step (230) of notifying the sender that the document is ready to be sent;
- a step (235) of detecting a validation of the document by the sender;
- a step of confirming, by a third party, the execution of said validation step;
- a step (255) of notifying the recipient that the document is available;
- a step (260) of detecting that the document has been accessed by the recipient;
- a step (265) of creating an electronic document-delivery report, said electronic document-delivery report comprising a set of data associated with the transmission of the document to the recipient, said set comprising identifications of elements of authentication of the recipient, of a sealof the document, of an access to the document by the recipient and of a time-stamp of the access to the document by the recipient; and
- a step (270) of a trusted third party electronically signing the electronic document-delivery report with its own private key.

2. The method according to claim 1, **characterised in that** the step (240) of confirming, by said trusted third party, the execution of said validation step comprises the creation of an electronic document-sent report, said electronic document-sent report comprising a set of data associated with the transmission of the document by the sender, said set comprising identifications of elements of authentication of the sender, of a seal of the document, of a validation of the document by the sender and of a time-stamping of the validation of the document by the sender, and **in that** it further comprises a step (245) of the trusted third party electronically signing the electronic document-sent report with its own private key.

3. The method according to claim 1, **characterised in that** said step (220) of strong authentication of the correspondent and/or said step (235, 260) of detecting a selection by said correspondent comprises sending a single-use code to a telephone and a step of entering, by said correspondent, said code on a computer terminal different from said telephone.

4. The method according to any one of claims 1 to 3, **characterised in that**, during said encryption step (225), the document is encrypted by a correspondence operator with its own electronic signature.

5. The method according to any one of claims 1 to 4, **characterised in that** the document that is transmitted to the recipient comprises a PDF file, a signature and a signature certificate.

6. The method according to any one of claims 1 to 5, **characterised in that** it comprises a step (265) of time-stamping the selection made by the correspondent during the step of detecting the selection.

7. The method according to any one of claims 1 to 6, **characterised in that**, during said step (260) of detecting a selection, a selection of an explicit message by the correspondent is detected using a pointing device.

8. The method according to any one of claims 1 to 7, **characterised in that**, during a step (240, 265) of creating a report, said report comprises links between the following data:
- the digital identity of the correspondent;
- reference to the certificate used to sign the document;
- the encrypted digital document;
- the reference to the empowered operator;
- the reference to the electronic signature of the empowered operator;
- the time-stamping of the selection made by the correspondent;
- the reference to the time-stamping authority; and
- the meaning of the executed action.

9. The method according to any one of claims 1 to 8, **characterised in that**, during a step (240, 265) of creating a report, said report comprises a link with a rating of the digital identity of the correspondent.

10. The method according to any one of claims 1 to 9, **characterised in that** it comprises a step (275) of archiving the legal signature established by each report.

11. A device for signing a document to be transmitted between two correspondents, a sender and a recipient, **characterised in that** it comprises:
- a means for registering the sender and the recipient of said document in order to assign them a digital identity;
- a means for strong authentication of digital identities of the sender and of the recipient using an ephemeral single-use code;
- a means for the recipient to outhouse correspondence with the sender;
- a means for encrypting the document;
- a means for notifying the sender that the document is ready to be sent;
- a means for detecting a validation of the document by the sender;
- a means for a trusted third party to confirm the execution of said validation step;
- a means for notifying the recipient that the document is available;
- a means for detecting access to the document by the recipient;
- a means for creating an electronic document-delivery report, said electronic document-delivery report comprising a set of data associated with the transmission of the document to the recipient, said set comprising identifications of elements of authentication of the recipient, of a seal of the document, of an access to the document by the recipient and of a time-stamp of the access to the document by the recipient; and
- a means for the trusted third party to electronically sign said electronic document-delivery report with its own private key.

12. The device according to claim 11, **characterised in that** said means for identifying the correspondent and/or said means for detecting a selection by said correspondent is/are designed to send a single-use code to a telephone and to receive and verify said code entered by the correspondent on a computer terminal different from said telephone.

13. The device according to any one of claims 11 to 12, **characterised in that** said encryption means is adapted to allow a correspondence operator to encrypt the document with the electronic signature of the correspondence operator.

14. The device according to any one of claims 11 to 13, **characterised in that** said means for creating a report is adapted to receive a link with a rating of the digital identity of a correspondent and to include this link in the report.
